# EUROPEAN PATENT APPLICATION

(11) **EP 2 088 054 A2**
(43) Date of publication of application: **12.08.2009**
(21) Application number: 08021972.8
(22) Date of filing: 18.12.2008
(51) Int. Cl.: B62B 3/14

(54) **Commercial communication device for shopping trolleys**

(30) Priority: 08.02.2008 IT MI20080052 U; 02.09.2008 IT MI20080273 U
(71) Applicant: Pisati, Pietro, 20030 Senago (MI) (IT); Sangiorgi, Vittorio Sergio, 20094 Corsico (MI) (IT)
(72) Inventor: Pisati, Pietro, 20030 Senago (MI) (IT); Sangiorgi, Vittorio Sergio, 20094 Corsico (MI) (IT)
(74) Representative: Cicogna, Franco

(57) **Abstract**

A commercial communication device for shopping trolleys is characterized in that it comprises a plate-like element which can be arranged in a bridging relationship on a wall of a trolley and the like, said plate-like element defining a plurality of recesses for applying therein at least an advertising message. According to one aspect of the present invention, the commercial communication device comprises a support element characterized in that said support element comprises a plate-like element which can be arranged with a bridging relationship on a wall of a shopping trolley and the like; said plate-like element defining a plurality of seats or recesses for removably housing therein at least an advertising sign. According to a further aspect of the present invention, the commercial communication device, designed for application to shopping trolleys comprises an either die-cut or molded plastic material plate-like body, defining two quadrangular portions separated by a middle portion.

## Description

### BACKGROUND OF THE INVENTION

The present invention relates to a commercial communication device, specifically designed for application to shopping trolleys.

As is known, a very important problem to be solved in the commercial advertising field, is that of properly supporting advertising signs as those which are conventionally applied to shopping trolleys and the like.

Prior approaches for solving the above problem, however, do not provide a proper protection for the advertising signs and, moreover, are not suitable for properly displaying said advertising signs and facilitating a possible replacement thereof.

### SUMMARY OF THE INVENTION

Accordingly, the aim of the present invention is to solve the above mentioned problems, by providing a commercial communication device, specifically designed for application to shopping trolleys, allowing to facilitate the exhibition or application of advertising signs both inside and outside of said shopping trolley.

Within the scope of the above mentioned aim, a main object of the present invention is to provide a commercial communication device, in the form of a supporting element for supporting advertising signs and the like, which can be installed in a very quick and simple manner and which, moreover, prevent the advertising signs from being undesirably removed.

Another important object of the present invention is to provide such a commercial communication device which is resistant to rain and other atmospheric agents and allows any desired advertising messages to be quickly and simply arranged both inside and outside of said shopping trolley.

Another object of the invention is to provide such a commercial communication device which can be easily and quickly installed, so as to facilitate a possible frequent replacement thereof.

Yet another object of the present invention is to provide such a commercial communication device which cannot be removed by unauthorized persons.

Yet another object of the present invention is to provide such a commercial communication device which, owing to its specifically designed constructional features, is very reliable and safe in operation, and has a very high mechanical resistance against mechanical tampering operations and the like.

Yet another object of the present invention is to provide such a commercial communication device which can be easily made and which, moreover, is very competitive from a mere economic standpoint.

According to one aspect of the present invention, the above mentioned aim and objects, as well as yet other objects, which will become more apparent hereinafter, are achieved by a commercial communication device for shopping trolleys, characterized in that said device comprises a plate element adapted to be arranged in a bridging relationship on a wall of a shopping trolley and the like, said plate element including a plurality of recesses for engaging therein at least an advertising message.

According to a further aspect of the present invention, the commercial communication device according to the invention comprises a supporting element, characterized in that said supporting element comprises a plate element which can be arranged with a bridging relationship on a wall of a shopping trolley and the like, said plate element defining a plurality of recesses for removably engaging therein at least an advertising sign.

According to yet another aspect of the present invention, the inventive commercial communication device, for application to shopping trolleys and the like, comprises a plastic material plate body, either die-cut or molded of a plastic material, and so designed as to comprise two quadrangular portions, separated by a middle portion.

In particular, the plate body can be folded along the middle portion thereof so as to cause the quadrangular portions to be arranged parallel to one another, thereby defining a front portion and a rear portion, as the device is arranged with the bridging relation on a wall of a shopping trolley or the like.

Thus, said front and rear portions define respectively an outer surface and an inner surface, thereon a commercial message is printed.

### BRIEF DESCRIPTION OF THE DRAWINGS

Further characteristics and advantages of the present invention will become more apparent hereinafter from the following detailed disclosure of a preferred, though not exclusive, embodiment of the invention, which is illustrated, by way of an indicative, but not limitative, example in the accompanying drawings, where:
Figure 1 is a schematic view showing the plate-like element included in the commercial communication device for shopping trolleys according to the present invention;
Figure 2 shows an operating step for applying the plate-like element to a shopping trolley;
Figure 3 schematically shows a supporting element coupled to the shopping trolley;
Figure 4 shows, on an enlarged scale, an advertising sign or board applied to a shopping trolley;
Figure 5 is a perspective view of a front side of a commercial communication device, advantageously made of a plastics material, according to the present invention;
Figure 6 is a further perspective view of the rear side of the commercial communication device shown in figure 5;
Figure 7 shows an operating step for applying the inventive commercial communication device to a shopping trolley; and
Figure 8 is a further perspective view of that same commercial communication device applied to a shopping trolley.

### DESCRIPTION OF THE PREFERRED EMBODIMENTS

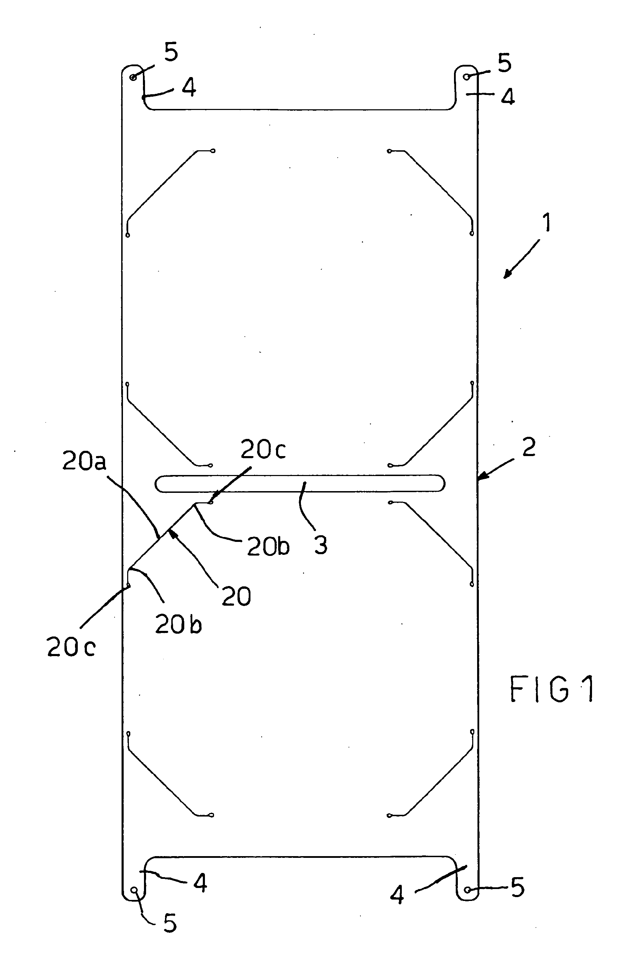

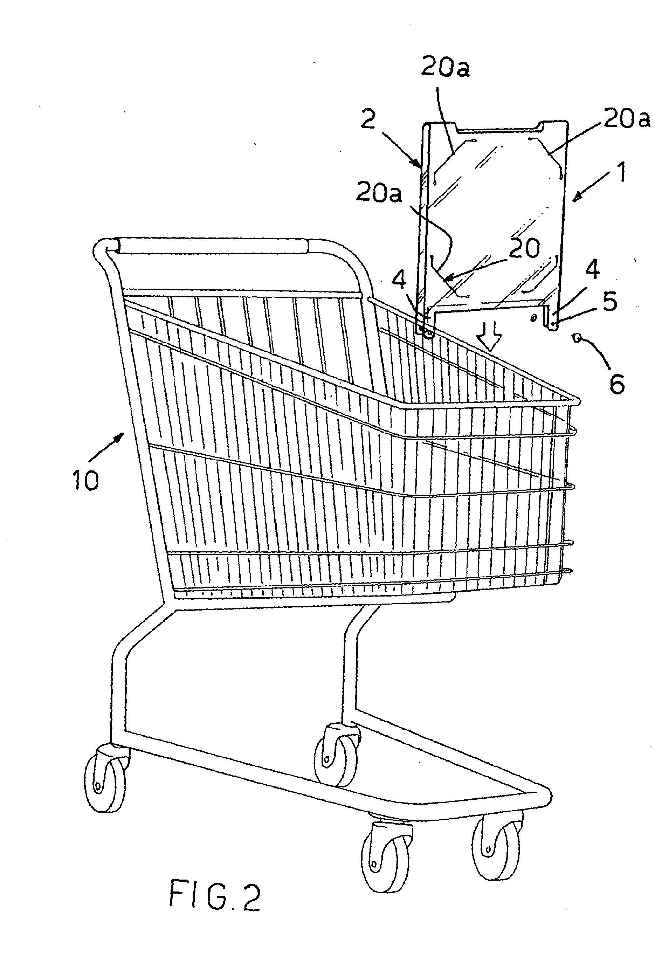

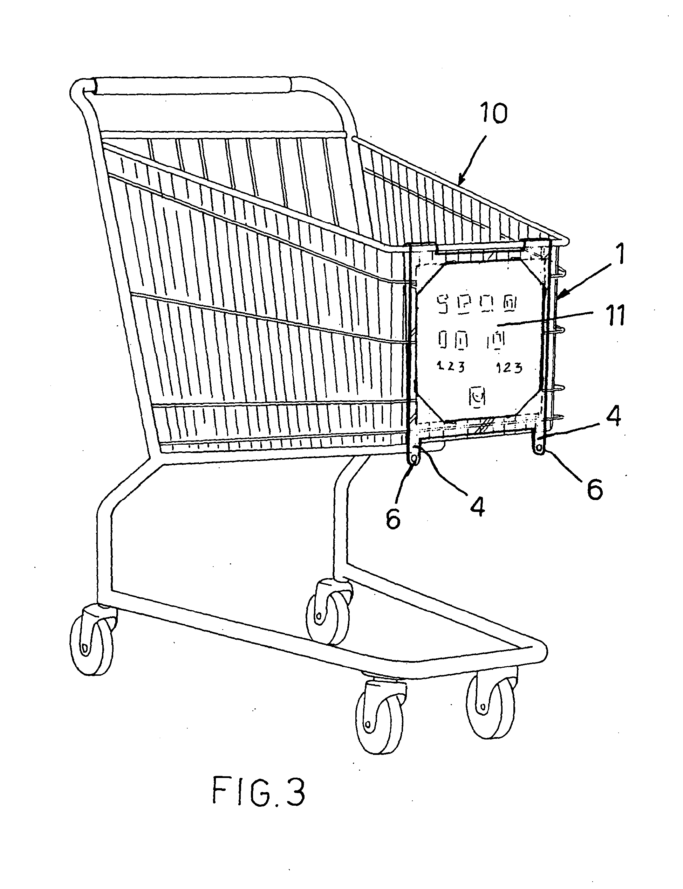

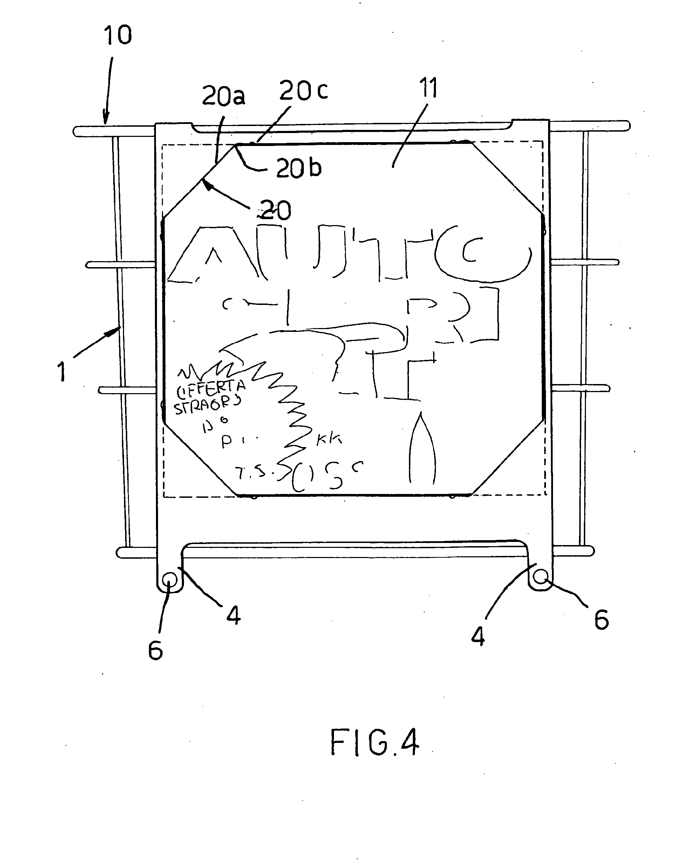

With reference to the number references of figures 1 to 4, the commercial communication device, according to the present invention, comprises a supporting element, generally indicated by the reference number 1, which comprises a plate-like element 2.

Said plate-like element 2 is advantageously made of a preferably clear plastics material, and has a substantially elongated configuration.

At a middle portion thereof, said plate-like element 2 defines a throughgoing lightening slot 3 whereas, at its opposite end portions, said plate-like element 2 comprises foot element 4 including throughgoing holes 5 for allowing clamping rivets 6 to be engaged therethrough, for coupling the supporting elements to the walls of a shopping trolley, generally indicated by the reference number 10.

As shown, said plate-like element 2 can be arranged in a bridging relationship on a wall of the shopping trolley 10 thereby defining an inner surface and an outer surface to which an advertising sign, generally indicated by the reference number 11, is applied.

For properly holding or restraining said advertising sign or board on each said face defined by the folded plate-like element, a plurality of seats or recesses 20 are herein provided, made of portions 20a slanted with respect to the longitudinal edges of the plate-like element 2 and ending with end portions 20b arranged parallel and perpendicular to the longitudinal extension of the assembly, the latter in turn merging in enlarged portions 20c operating for preventing possible fractures from propagating.

In particular, said plate-like element 2 can be made starting from a clear plastics material.

In turn, the advertising sign or board can be arranged under said plate-like element, to allow only the corners of said advertising sign to project through the recesses or seats 20.

Thus, by the above solution, the advertising signs will be properly protected and clearly visible.

Owing to the above disclosed arrangement, it is possible to arrange an advertising sign or board on both portions of the folded or bent plate-like element, thereby allowing the advertising signs to be clearly seen both by the shopping trolley user and by people arranged nearby.

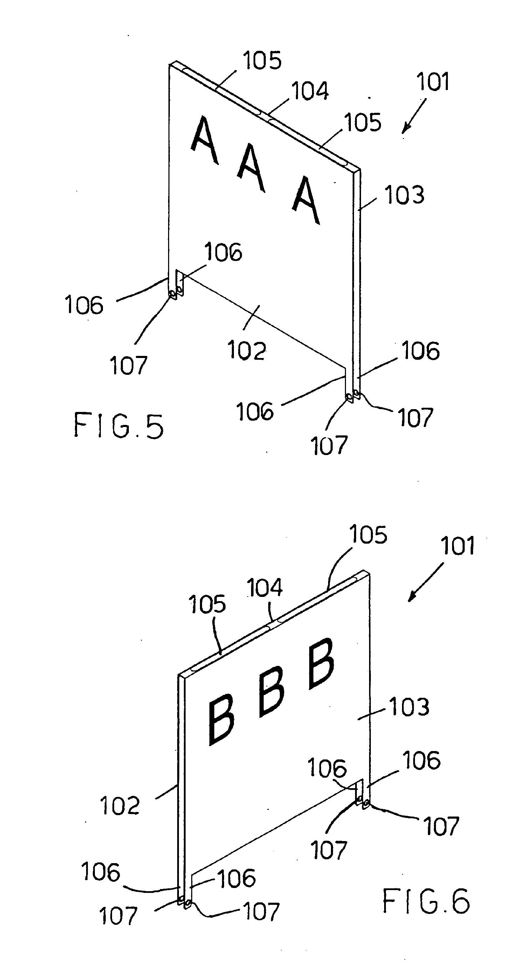

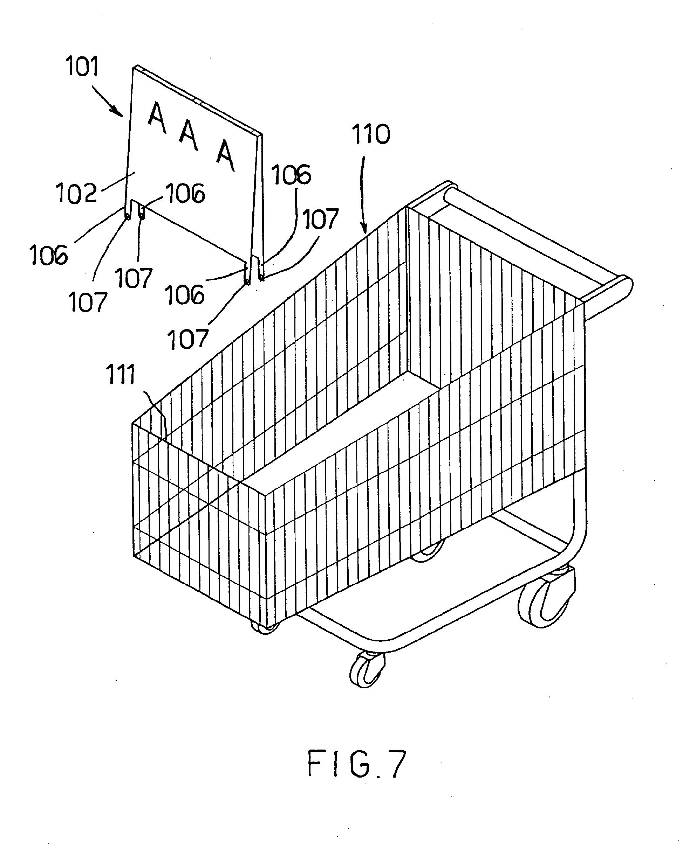

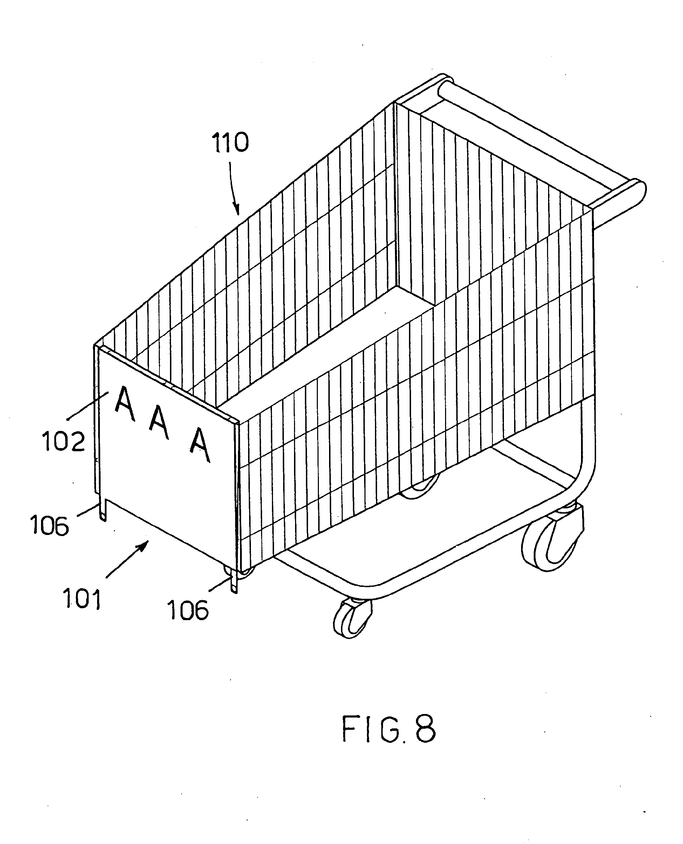

Figures 5 to 8 show a further embodiment of the commercial communication device according to the present invention, which comprises herein a plate-like body, generally indicated by the reference number 101, also made of a plastics material, having a good resistance against rain and other atmospheric agents.

More specifically, said plate-like body is so die-cut or molded as to define two quadrangular portions, respectively indicated by the reference numbers 102 and 103, which are separated by a middle portion 104.

Said middle portion 104 defines a plurality of throughgoing slots 105, having lightening functions, whereas, at the opposite ends of said quadrangular portions 102 and 103, are provided respective extensions 106 including respective throughgoing holes 107 for engaging therein clamping rivets for clamping said plate-like body 101 to the walls of the shopping trolley 110.

Actually, said plate-like body can be folded along its middle portion 104, thereby arranging its quadrangular portions parallel to one another to define a front portion 102 and a rear portion 103.

The thus bent or folded device can be arranged with a bridging relationship on a wall of the shopping trolley 110, thereby defining an inner and an outer surface.

In the figures the communication device has been shown applied to the front wall 111 of the shopping trolley 110; however, the subject commercial communication device could also be applied to the other walls of the shopping trolley.

The plate-like body 101 is made of a suitable plastics material, thereon it is possible to directly print, by modern printing methods, any desired types of images or texts.

In this connection it should be pointed out that the used printing system can be specifically designed depending on the advertising message exhibition time and also considering the fact that the exposed to the view surfaces of the device can be subjected to impacts and rubbings due to a normal use of the shopping trolley.

With the above disclosed arrangement, it is possible to apply an advertising message on both the exposed to the view surfaces of the quadrangular portions of the folded plate-like body, thereby allowing the advertising messages to be clearly seen both by the trolley user and the people arranged nearby.

It has been found that the invention fully achieves the intended aim and objects.

In fact, the invention has provided a device allowing to communicate an advertising message in a very inexpensive and efficient manner.

In particular, the fact is to be pointed out that a supporting element 1, specifically designed for supporting advertising signs and the like has been provided, allowing to removably and quickly engage the advertising sign by simply inserting the corner portions thereof into the seat 20, which will further operate as a safe means for restraining the advertising sign on the trolley.

In practicing the invention, the used materials, provided that they are compatible to the intended application, as well as the contingent size and shapes, can be any, depending on requirements.

## Claims

1. A commercial communication device, particularly for shopping trolleys, **characterized in that** said device comprises a plate element adapted to be arranged with a bridging relationship on a wall of a shopping trolley and the like, said plate element including a plurality of recesses for engaging therein at least an advertising message.

2. A commercial communication device, according to claim 1, **characterized in that** said plate element defines a plurality of recesses for removably housing therein at least an advertising sign.

3. A commercial communication device, according to claim 1, **characterized in that** said device comprising a lightening slot in a middle portion of said plate element.

4. A commercial communication device, according to claim 1, **characterized in that** said device further comprises, on opposite end portions of said plate element, a plurality of foot elements including a respective hole for engaging therein a clamping rivet for clamping said plate element to said shopping trolley.

5. A commercial communication device, according to claim 1, **characterized in that** said plate element is made of an optically clear material.

6. A commercial communication device, according to claim 1, **characterized in that** said recesses comprise cut-outs slanted with respect to the longitudinal edges of said plate element and merging with end portions arranged parallel and perpendicular to the longitudinal extension of said plate element.

7. A commercial communication device, according to claim 1, **characterized in that** said device further comprises, at said end portions, rounded enlarged portions for preventing said plate element from breaking.

8. A commercial communication device, according to claim 1, **characterized in that** said device comprises an advertising sign on both faces as folded on a wall thereof.

9. A commercial communication device, according to claim 1, **characterized in that** said device comprises a die-cut or molded plastics material plate body defining two quadrangular portions separated by a middle portion, said plate body being adapted to be folded along a middle portion thereof to cause said quadrangular portions to be arranged parallel to one another thereby defining a front portion and a rear portion as said device is arranged in a bridging relationship on a wall of a shopping trolley or the like, said plastics material front and rear portions respectively defining an outer surface and an inner surface thereon a commercial message is printed.

10. A commercial communication device, according to claim 1, **characterized in that** said plate body is made of a plastics material and is directly printed upon by modern printing methods allowing to apply any desired images or texts on exposed to the view surfaces thereof.

11. A commercial communication device, according to claim 1, **characterized in that** said middle portion defines a plurality of lightening throughgoing slots, at the opposite end portions of said quadrangular portions being provided extensions including throughgoing holes for engaging therein clamping rivets for clamping said device to the walls of said shopping trolley.
